# EUROPEAN PATENT APPLICATION

(11) **EP 2 226 313 A1**
(43) Date of publication of application: **08.09.2010**
(21) Application number: 09305187.8
(22) Date of filing: 02.03.2009
(51) Int. Cl.: C07C 409/38

(54) **Transportable and safely packaged organic peroxide formulations**

(71) Applicant: ARKEMA FRANCE, 92700 Colombes (FR)
(72) Inventor: Maj, Philippe, 69530 Brignais (FR)

(57) **Abstract**

The present invention relate to a packaged peroxide formulation comprising a container and a liquid peroxide formulation, which comprises a container and a liquid peroxide formulation, wherein :
- said container has a volume of at least 50 litres,
- said liquid peroxide formulation comprises (i) 51 to 59 wt% of an organic peroxides selected from the group consisting of peroxyesters, their derivatives, and mixtures therof, and (ii) optionally an additive selected from the group consisting of a phlegmatiser.

The invention also relates to a method to safely produce, handle and transport a packaged organic peroxide formulations as defined above.

## Description

The present invention relates to containers containing specific organic peroxide formulations that can be handled, produced, and shipped in a safe manner and where the organic peroxide presents a low partial pressure.

Organic peroxides have long been known. Due to the safety hazards associated with most of them, they are often diluted with one or more specific solvents, also known as phlegmatisers. Indeed, Organic peroxides are liable to exothermic decomposition. They can decompose above a certain critical temperature to produce gas and heat. The heat produced promotes further decomposition. The storage and transportation of these compounds is particularly troublesome in that the build-up of decomposition gases in the transportation or storage container may cause violent, hazardous explosions, bursting the container holding the peroxide. In recognition of this problem, international safety laws and standards regulate the transportation and storage of these compounds.

The larger the container, the lower its surface-to-volume ratio, and the more difficult the transmittal of heat to the surroundings in case of thermal decomposition. Hence, storage and transport of peroxides becomes more hazardous when the container volume increases.

Then, as mentioned above, classical phlegmatising agents are used to improve transportation and storage safety. Classical phlegmatising agents are hydrocarbons and esters, such as phthalates. The larger the container, the more diluted a peroxide formulation generally needs to be. For instance, t-butyl peroxy-2-ethylhexanoate (Trigonox(R) 21) is presently transported in 30-litre containers in a concentration up to 100 wt%. However, safety considerations have limited the peroxide concentration in larger tanks to 30 wt% of the peroxide.

The use of a phlegmatiser has several disadvantages. For instance, when the peroxide formulation is used in a polymerisation reaction, the phlegmatiser may end up in the resin that is produced. This is evidently undesired. Further, from an economical viewpoint, it is undesired to transport and store large volumes which contain only a relatively small amount of the actual reagent.

The present invention aims at providing a new transportable and safely packaged organic peroxide formulation in large containers and with a high concentration, thereby decreasing the phlegmatiser content.
It has been shown according to the present invention, that a very safe storage is achieved when a large container is filled with a formulation of organic peroxide presenting a specific concentration.
More precisely, it has been shown according to the present invention, that a peroxiester formulation, presenting in a formulation, a concentration ranging from 51 to 59 WT% is particularly stable when packaged in a large container.
Accordingly, the present invention firstly relates to a packaged peroxide formulation which comprises a container and a liquid peroxide formulation, wherein
- said container has a volume of at least 50 litres,
- said liquid peroxide formulation comprises (i) 51 to 59 wt% of an organic peroxide selected from the group consisting of peroxyesters, their derivatives, and mixtures thereof, and (ii) optionally an additive selected from the group consisting of a phlegmatisers, and antistatic agents.

The formulation according to the invention may be a solution, an emulsion or suspensions. These formulations may consist of 100% pure liquid peroxide, but preferably consist in a solution of a peroxide in a solvent that either dissolves the peroxide (in case of a solid peroxide) or dilutes the peroxide to form a homogeneous liquid (in case of a liquid peroxide). The solvent is also known as phlegmatiser.

The container in which the peroxide formulation is packaged has a volume of at least 50 litres, preferably at least 200 litres, more preferably at least 800 litres, and most preferably at least about 1 ,000 litres. The container volume preferably is not more than 20,000 litres, more preferably not more than 10,000 litres. The container must have an opening to quickly release the whole container content in case a certain maximum pressure is exceeded, so that an explosion can be avoided. The required size of this opening (the vent area) depends on, e.g., the volume of the container, the material of which the container is made, and the type and concentration of the peroxide that is present in the container. The required minimum vent area for a specific packaged formulation can be determined by the 10 litre venting test as described in Amendment 1 to the 4th revised edition of the Manual of Test and Criteria - ST/SG/AC.10/32/Add.2 (23 February 2005), Appendix 5 - of the United Nations Recommendations on the Transport of Dangerous Goods.
Particularly suitable containers are the well-known Intermediate Bulk Container.

The packaged peroxide formulation according to the present invention is preferably stored and transported at temperatures above -20°C, preferably above -10°C, more preferably above 0°C. The preferred maximum storage and transportation temperature is generally about 50°C. A further advantage of the packaged peroxide formulation according to the present invention is that ice formation
- resulting from the small amount of water that is generally present in peroxide formulations - during storage and transportation at temperatures below 0°C is reduced. Ice formation may result in blocked and/or frozen valves, which may hamper the container unloading process. The liquid peroxide formulation will preferably satisfy the classification tests for "organic peroxide Type F", of the Manual of Tests and Criteria (4th revised edition), Part II, Division 5.2 of United Nations Recommendations on the Transport of Dangerous Goods, resulting in a classification UN 3109 and/or UN 3119. These tests are known to every person skilled in the art of organic peroxide chemistry.

The organic peroxide concentration in the liquid peroxide formulation is comprised between 51 WT% to 59 WT%, more preferably comprised between 53 WT% to 57 WT%, and most preferably comprised between 55 WT% to 57 WT%. All weight percentages are based on the total weight of the peroxide formulation.

Prefered organic peroxyester according to the invention are 1 ,1 ,4,4-tetramethylbutyl-1 ,4-di(peroxy-2-methylpropanoate), tert-butylperoxy neodecanoate, tert-amylperoxy neodecanoate, 1 ,1 ,3,3-tetramethyl butyl-1-peroxy neodecanoate, 1 ,1-dimethyl-3- hydroxy butyl-1-peroxy neodecanoate, tert-butylperoxy pivalate, tert-amylperoxy pivalate, 1 ,1 ,3,3-tetramethyl butyl-1-peroxy pivalate, 1 ,1-dimethyl-3-hydroxy butyl- 1-peroxy pivalate, tert-butylperoxy 2-ethylhexanoate, tert-amylperoxy 2- ethylhexanoate, 1 ,1 1 ,3,3-tetramethyl butyl-1-peroxy 2-ethylhexanoate, 1 ,1- dimethyl-3-hydroxy butyl-1-peroxy 2-ethylhexanoate, tert-butylperoxy benzoate, tert-amylperoxy benzoate, 1 ,1 ,3,3-tetramethyl butyl-1-peroxy benzoate, 1 ,1- dimethyl-3-hydroxy butyl-1-peroxy benzoate, tert-butylperoxy 3,3,5-trimethylhexanoate, tert-amylperoxy 3,3,5-trimethylhexanoate, 1 ,1 ,3,3-tetramethyl butyl-1-peroxy 3,3,5-trimethylhexanoate, 1 ,1-dimethyl-3-hydroxy butyl-1-peroxy 3,3,5-trimethylhexanoate, tert-butylperoxy isobutyrate, tert-amylperoxy isobutyrate, 1 ,1 1 ,3,3-tetramethyl butyl-1-peroxy isobutyrate, and 1 ,1-dimethyl-3- hydroxy butyl-1-peroxy isobutyrate and mixtures therof.

The liquid peroxide formulation may contain a phlegmatiser. Suitable phlegmatisers include paraffinic and white oils, n-paraffins, iso-paraffins, aromatic hydrocarbons, and oxygenated hydrocarbons, such as ethers, epoxides, and esters. More specific examples are toluene, xylene, (diesel) fuel, phthalates, adipates, epoxidised soybean oil, n-octane, n-decane, isododecane, and ethylbenzene.

Preferably, the packaged peroxide formulation is essentially free of chlorinated species, since such species may lead to corrosion problems or interfere with the polymerisation process in which the formulations are used as a source of free radicals.

Further, the packaged peroxide formulation may contain an antistatic agent such as an organic or inorganic acid or a salt thereof.
The present invention further relates to a method to safely transport peroxide formulation in containers having a size greater than 50 L, wherein the containers are filled with:
- from 51 to 59 WT% of one or more peroxides selected from the group consisting of peroxyesters, their derivatives, and mixtures therof,
- at least one solvent and/or additives up to a total of 100 WT%.

The invention further relates to a method for producing a polymer by means of a radical polymerisation process using organic peroxide as a source of free radicals, which method involves transporting the packaged peroxide formulation according to the invention to a polymerisation unit and introducing the peroxide formulation into the polymerisation process. Examples of such polymerisation processes are processes to make polyvinyl chloride, copolymers of vinyl chloride, poly(meth)acrylate (co)polymers, etc. Preferably, the process is a styrene suspension (co)polymerisation process or a high-pressure ethylene (co)polymerisation process. Comonomers that may be used in the (co)polymerisation process of ethylene are of the conventional type and include alkenes, such as propene, (cyclo)hexene and (cyclo)octene, and vinyl acetate. Comonomers that may be used in the (co)polymerisation process of styrene are of the conventional type and include divinyl benzene. The amount of organic peroxide used in these conventional (co)polymerisation processes will vary, depending on the polymerisation temperature, the capacity for removing the heat of polymerisation, the kind(s) of monomer(s) used, and the applied pressure. Usually, from 0.001-25 wt% of organic peroxide, based on the total weight of the monomers, is employed. Preferably, from 0.001-15 wt% of peroxide is employed.

The invention also relates to a process for modifying a (co)polymer - such as in cross-linking, grafting, and controlled degradation processes, e.g. the formation of polypropylene with another molecular weight and/or molecular weight distribution - by transporting the packaged peroxide formulation according to the invention to a polymer modification unit and introducing the peroxide formulation into the process.

### Examples

In the following examples, the flashpoint of several compositions has been measured. As well known from the man skilled in the art, the flash point is the lowest temperature at which a liquid gives off enough vapors which, when mixed with air, can be easily ignited by a spark. The higher the flash point, the lower the risk of fire or explosion.

### Example 1:

The flashpoint of the following composition has been measured.
Composition A : (according to the invention)
   Solution of T-butyl peroxy 3,5,5-trimethylhexanoate at 55 WT% in isododecane
Composition B : (according to the invention)
   Solution of T-butyl peroxy-2-ethylhexanoate at 55 WT% in isododecane
Composition C: (comparative)
   Solution of T-butyl peroxy 3,5,5-trimethylhexanoate at 40 WT% in isododecane

The flashpoints have been measured according to the method defined into to "annex A.9 Flash point" from European Directive 67/548/EEC, and according to ASTM D3828, ISO 3679, ISO 3680 and according to regulation 440/2008 from May 30, 2008.

According to this method, 2 ml of a sample of compositions A, B and C are used, in equilibrium with their respective vapor. When the equilibrium is reached, a test flame is presented near the sample and emergence of a strike is searched. The temperature of the sample is enhanced until the occurrence of a strike.

The results have been gathered in the table I below

**Table I**

| | Flashpoint according to ASTM D3828, ISO 3679 or ISO 3680 | Correction to the measured temperature due to atmospheric pressure | Atmospheric pressure | Flashpoint, corrected from atmospheric pressure |
|---|---|---|---|---|
| Composition A (according to the invention) | 52°C | 0,7 | 986 hPa | 52,5°C |
| Composition B (according to the invention) | 51,5°C | 0,7 | 986 hPa | 52°C |
| Composition C (comparative example) | 49°C | 0,5 | 994 | 49,5°C |

As it appears in table I above, compositions A and B according to the invention, comprising 51 to 59 wt% of an organic peroxide, presents a flashpoint above 50°C which allows for a safe transport and storage, contrary to the comparative composition C presenting a flashpoint below 50°C.

## Claims

1. A packaged peroxide formulation which comprises a container and a liquid peroxide formulation, wherein
- said container has a volume of at least 50 litres,
- said liquid peroxide formulation comprises (i) 51 to 59 wt% of an organic peroxide selected from the group consisting of peroxyesters, their derivatives, and mixtures thereof, and (ii) optionally an additive selected from the group consisting of a phlegmatisers, and antistatic agents.

2. Packaged peroxide formulation according to claim 1 wherein the container has a volume in the range 200-10,000 litres.

3. Packaged peroxide formulation according to any one of the preceding claims wherein the organic peroxide concentration in the liquid peroxide formulation is in the range of 53 - 57 wt%.

4. Packaged peroxide formulation according to any one of the preceding claims wherein the organic peroxide is a peroxyester selected in the group consisting of 1 ,1 ,4,4-tetramethylbutyl-1 ,4-di(peroxy-2-methylpropanoate), tert-butylperoxy neodecanoate, tert-amylperoxy neodecanoate, 1 ,1 ,3,3-tetramethyl butyl-1-peroxy neodecanoate, 1 ,1-dimethyl-3- hydroxy butyl-1-peroxy neodecanoate, tert-butylperoxy pivalate, tert-amylperoxy pivalate, 1 ,1 ,3,3-tetramethyl butyl-1-peroxy pivalate, 1 ,1-dimethyl-3-hydroxy butyl- 1-peroxy pivalate, tert-butylperoxy 2-ethylhexanoate, tert-amylperoxy 2- ethylhexanoate, 1 ,1 ,3,3-tetramethyl butyl-1-peroxy 2-ethylhexanoate, 1 ,1- dimethyl-3-hydroxy butyl-1-peroxy 2-ethylhexanoate, tert-butylperoxy benzoate, tert-amylperoxy benzoate, 1 ,1 ,3,3-tetramethyl butyl-1-peroxy benzoate, 1 ,1- dimethyl-3-hydroxy butyl-1-peroxy benzoate, tert-butylperoxy 3,3,5-trimethylhexanoate, tert-amylperoxy 3,3,5-trimethylhexanoate, 1 ,1 ,3,3-tetramethyl butyl-1-peroxy 3,3,5-trimethylhexanoate, 1 ,1-dimethyl-3-hydroxy butyl-1-peroxy 3,3,5-trimethylhexanoate, tert-butylperoxy isobutyrate, tert-amylperoxy isobutyrate, 1 ,1 1 ,3,3-tetramethyl butyl-1-peroxy isobutyrate, and 1 ,1-dimethyl-3- hydroxy butyl-1-peroxy isobutyrate and mixtures therof.

5. Packaged peroxide formulation according to any one of the preceding claims wherein the liquid peroxide formulation comprises a phlegmatiser selected from the group consisting of paraffinic and white oils, n-paraffins, iso-paraffins, aromatic hydrocarbons, ethers, epoxides, and esters.

6. A method to safely transport peroxide formulation in containers having a size greater than 50 L, wherein the containers are filled with:
- from 51 to 59 WT% of one or more peroxides selected from the group consisting of peroxyesters, their derivatives, and mixtures therof,
- at least one solvent and/or additives up to a total of 100 WT%.

7. A method to produce a polymer by means of a radical polymerisation process using organic peroxide as a source of free radicals, which method involves transporting a packaged peroxide formulation according to any one of the preceding claims to a polymerisation unit and introducing the liquid peroxide formulation into the polymerisation process.
